# EUROPEAN PATENT APPLICATION

(11) **EP 1 486 888 A2**
(43) Date of publication of application: **15.12.2004**
(21) Application number: 04013196.3
(22) Date of filing: 03.06.2004
(51) Int. Cl.: G06F 17/30

(54) **Page browsing apparatus**

(30) Priority: 03.06.2003 JP 2003158172
(71) Applicant: NEC CORPORATION, Tokyo (JP)
(72) Inventor: Sawada, Masaki, Tokyo (JP)
(74) Representative: Betten & Resch

(57) **Abstract**

According to the present invention, a page browsing apparatus for browsing page data at a site connected to a network, comprises: a storage unit, for storing previously browsed page data; a display unit, for displaying, using a tree structure, page data and predetermined data representing previously browsed pages and recorded in the storage unit; a selection unit, for selecting data for a desired page from the predetermined data that are displayed, using the tree structure, on a display screen for the display unit; and a unit, for displaying, on the display screen of the display unit, the data for the desired page selected by the selection unit.

## Description

### BACKGROUND OF THE INVENTION

### Technical Field of the Invention:

The present invention relates to a page browsing apparatus for browsing a site on the Internet, for example, for information.

### Description of Related Arts:

Conventionally, when a fixed data terminal or a portable data terminal is employed to obtain data from an Internet site, a reduction in the data acquisition time period is generally achieved by loading, into a storage device, once part of data for pages that have been obtained, and by reading the data from the storage device when browsing of the obtained page is to be repeated.

Disclosed in Japanese Patent Laid-Open Publication No. 2000-222433 (patent document 1) is a browsing processor whereby, when a current location can not be identified during a data search of the WWW, the current location can be easily presented to return a correct path. According to this processor, only pages that have been accessed using a tree structure and pages that are directly linked to these pages are displayed separately and in accordance with the history.

Further, in Japanese Patent Laid-Open Publication No. 2002-207766, a technique is disclosed whereby the history of pages can be displayed that were downloaded using a tree structure based on linking of a link source.

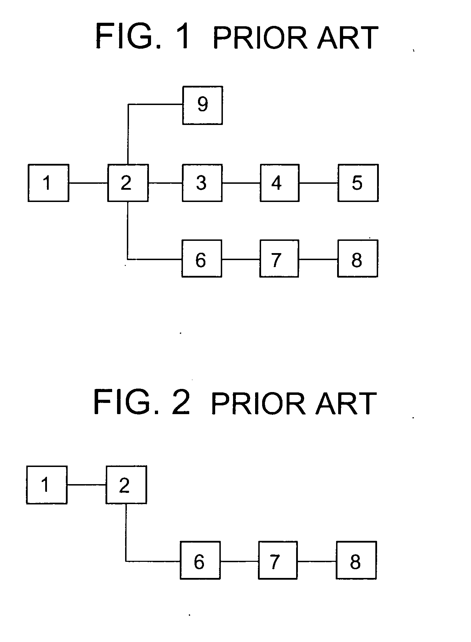

According to the conventional methods, when an example site, such as the one shown in Fig. 1, is to be browsed, data for pages 1, 2, 3, 4 and 5 are sequentially browsed first, and after that, beginning at page 2, data for pages 6, 7 and 8 are browsed. (Please note that the numerical values used in Figs. 1 and 2 are page numbers.) Thus, when the browsing of page 5 data is to be repeated, since as shown in Fig. 2 only data for pages 1, 2, 6, 7 and 8 are recorded in the storage device, data for pages 3, 4 and 5 must again be obtained by once more beginning at page 2. Such processing, therefore, involves the expenditure of much time and effort, and is very complicated. Furthermore, if a pay-for-use system is being employed, a waste usage fee is charged.

According to the methods proposed in the two patent documents 1 and 2, a current location can be easily identified and the page to which to return can easily be discerned. But in spite of these ameliorative factors, additional time and effort are required to browse pages repeatedly.

### SUMMARY OF THE INVENTION

To resolve these shortcomings, it is an object of the present invention to provide a page browsing apparatus that enables the rapid, intelligible and effortless rereading of pages.

To achieve the object, according to a first aspect of the invention, a page browsing apparatus for browsing page data at a site connected to a network, comprises: a storage unit, for storing previously browsed page data; a display unit, for displaying, using a tree structure, page data and predetermined data representing previously browsed pages and recorded in the storage unit; a selection unit, for selecting data for a desired page from the predetermined data that are displayed, using the tree structure, on a display screen for the display unit; and a unit, for displaying, on the display screen of the display unit, the data for the desired page selected by the selection unit.

According to a second aspect of the invention, a page browsing apparatus, for browsing page data at a site connected to a network, comprises: a storage unit, for storing page previously browsed data; a first display unit, for displaying page data; a second display unit, for displaying, using a tree structure, predetermined data representing previously browsed pages and stored in the storage unit; a selection unit, for selecting data for a desired page from the predetermined data that are displayed, using the tree structure, on the second display unit; and a unit that displays, on the first display unit, the data for the desired page selected by the selection unit.

As is apparent from these aspects, according to the invention, a tree structure is used to display specific data, such as a URL and a page name, for a previously browsed site, and data for a desired page can be selected from the specific data. As a consequence, the current page can be directly shifted to a designated page, and browsing of the site can be performed rapidly, intelligibly and effortlessly.

Further, for a pay-for-use charge system, such as a packet charge system or a time charge system, the usage fee can be reduced because no unwanted data are acquired.

The above and many other objects, features and advantages of the present invention will become manifest to those skilled in the art upon referring to the following detailed description, and the accompanying drawings, in which preferred embodiments incorporating the principle of the present invention are presented using illustrative examples.

### BRIEF DESCRIPTION OF THE DRAWINGS

Fig. 1 is a diagram showing an example conventional browsing site;
Fig. 2 is a diagram for explaining the storage of pages in a storage device when the site shown in Fig. 1 is browsed;
Fig. 3 is a schematic block diagram showing the configuration of a page browsing apparatus according to a first embodiment of the present invention;
Fig. 4 is a diagram showing the display screen of a display device used for the page browsing apparatus in Fig. 3 according to the first embodiment;
Fig. 5 is a flowchart showing'the operation of the page browsing apparatus in Fig. 3 according to the first embodiment;
Fig. 6 is a diagram for explaining the storage of pages in a storage device used for the page browsing apparatus in Fig. 3 according to the first embodiment;
Fig. 7 is a diagram for explaining the processing performed by the page browsing apparatus in Fig. 3 according to the first embodiment to select a desired page from previously browsed pages;
Fig. 8 is a schematic block diagram showing the configuration of a page browsing apparatus according to a second embodiment of the present invention; and
Figs. 9A and 9B are diagrams showing the display screen of a display device used for the page browsing apparatus in Fig. 8 according to the second embodiment.

### DETAILED DESCRIPTION OF THE PREFERRED EMBODIMENTS

The preferred embodiments of the present invention will now be described in detail while referring to the accompanying drawings.

### First Embodiment:

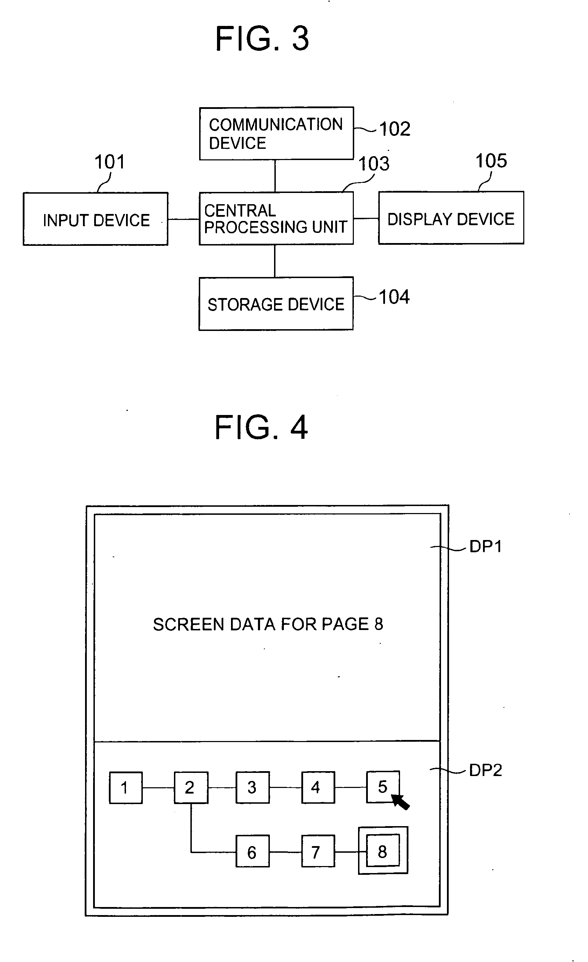

Fig. 3 is a schematic block diagram showing the configuration of a page browsing apparatus according to a first embodiment of the present invention. In this embodiment, an explanation will be given for an example configuration for a data terminal that includes one display device. An input device 101 is, for example, a keyboard or a pointing device, and is used to supply data to a central processing unit (CPU) 103. Based on the data received from the input device 101, the central processing unit 103 controls the individual sections of the page browsing apparatus, and either stores page data in a storage device (memory) 104 or displays data on a display device 105.

Furthermore, also based on data received from the input device 101, the central processing unit 103 controls a communication device (a modem or a radio device) 102, and obtains data from a site via the Internet (not shown).

In this embodiment, in order to obtain data from a site, the display screen of the display device 105 is, for example, divided into two segments, a DP1 and a DP2, as is shown in Fig. 4. Page data currently being browsed is displayed on the display screen DP1, while specific data (URLs or page names) for previously browsed pages are displayed on the display screen DP2 using a tree structure. In Fig. 4, for convenience sake, the page numbers are displayed using a tree structure. However, the URLs or the page names are actually displayed with the tree structure, as is described above. Page data for previously browsed pages are stored in the storage device 104.

When the screen of the display device 105 is small, or when the tree on the display is to be enlarged, a full-screen image of the tree can be displayed without dividing the screen. In this case, when based on the tree data a page to be displayed is selected by manipulating the input device 101, the screen of the display device 105 is changed, and a full-screen display of the selected page data is presented.

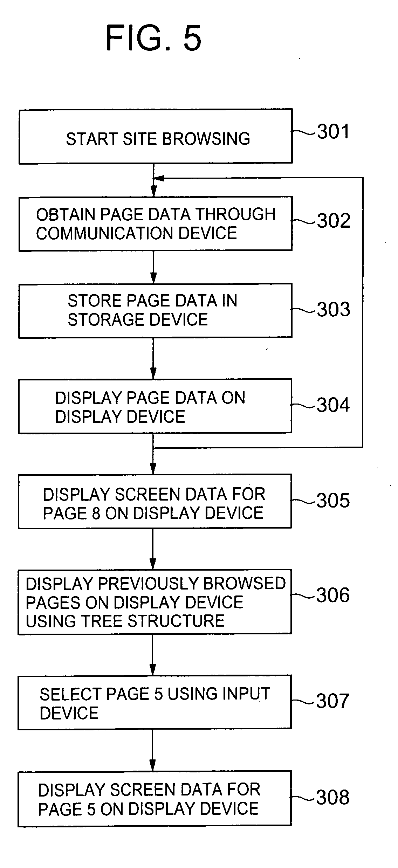

Next, a specific operation of the page browsing apparatus according to the first embodiment will now be described while referring to a flowchart in Fig. 5. First, when the browsing of a site is started based on data entered using the input device 101 (step 301), the central processing unit 103 controls the communication device 102 and obtains page data from the designated site (step 302). For this processing, assume that there is a site structured as is shown in Fig. 1 and that the browsing of this site has been designated.

As is shown in Fig. 1, pages 1, 2, 3, 4 and 5 are sequentially browsed, and then, by beginning again at page 2, pages 6, 7 and 8 are browsed. Therefore, as the page browsing is being performed, data for pages 1, 2, 3, 4 and 5 are stored in the storage device (step 303), and page data are displayed, in the browsing order, on the display device 105 (step 304).

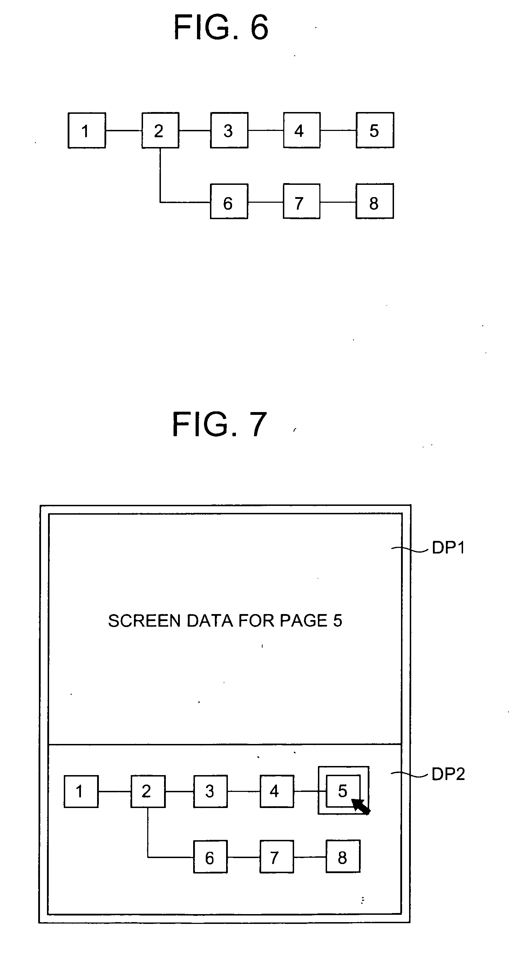

Then, the processes at step 302 to 304 are repeated, and as is shown in Fig. 6, pages 1, 2, 3, 4, 5, 6, 7 and 8 are stored in the storage device 104. At this time, as is shown in Fig. 4, data for page 8, which was browsed last, is displayed on the display unit 105 (step 305).

When the data for page 5 is to be displayed on the display screen DP1 of the display device 105 in order to browse the data for page 5 again, only a switch (not shown) provided for the input device 101 need be manipulated, and as is shown in Fig. 7, specific data (URLs or page names) for previously browsed pages are displayed with the tree structure on the other display screen DP2 of the display device 105 (step 306).

In this state, an icon is selected for page 5 by manipulating the input device 101 as is shown in Fig. 7, or a number key is directly depressed (step 307). Then, as is shown in Fig. 7, data for page 5 is displayed on the display screen DP1 (step 308). This process is performed by reading the data for page 5 from the storage device 104. It should however be noted that when the display screen of the display device 105 is small, or when the tree on the display is to be enlarged, a full-screen display may be employed to present the tree used for the previously browsed pages, without the screen being divided.

As is described above, according to the first embodiment, complicated, extended links can be displayed using a tree structure, and by entering a number or selecting an icon, an immediate shift from a current page to a desired page can be made. Therefore, the time and effort expended can be reduced. And furthermore, when pay-for-use charge systems, such as packet charge systems or time charge systems, are employed, because unnecessary data need not be acquired, savings in usage fees can be realized and economical effects increased.

### Second Embodiment:

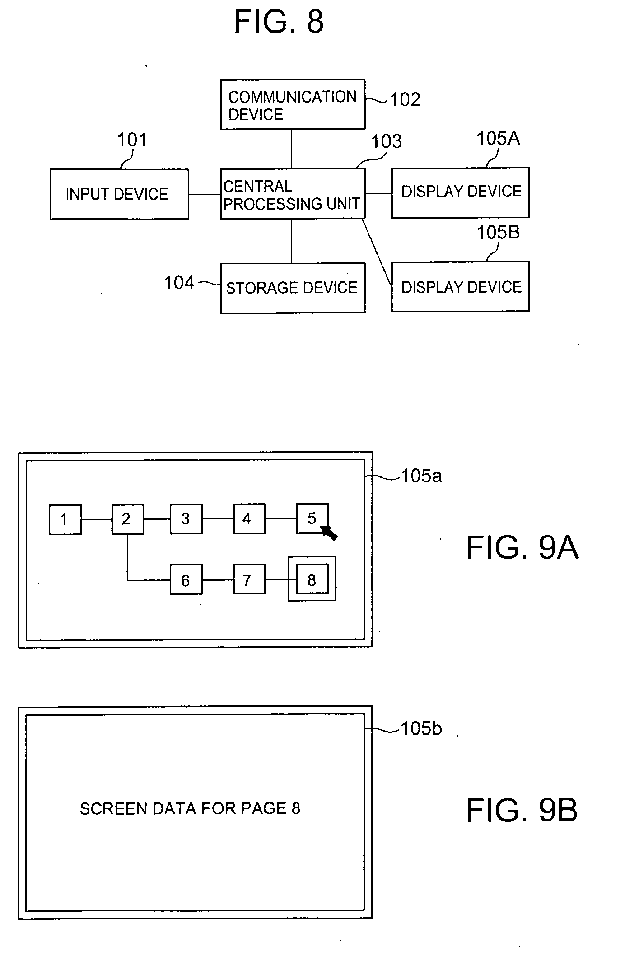

Fig. 8 is a schematic block diagram showing the configuration of a page browsing apparatus according to a second embodiment of the present invention. The same reference numerals as are used in Fig. 3 are also employed in Fig. 8 to denote corresponding components, and no further explanation for them will be given. The configuration for the second embodiment is the same as that for the first embodiment, with the exception that, as is shown in Fig. 8, two display devices 105A and 105B are provided. In the second embodiment, as is shown in Fig. 9A, previously browsed pages are displayed, using a tree structure, on a display screen 105a of the display device 105A, while page data that is currently being browsed, or page data selected from a plurality of page data sets that were previously browsed are displayed on a display screen 105b of the display device 105B.

In this embodiment, as well as in the first embodiment, when the display of specific page data for a previously browsed page 1, 2, 3, 4, 5, 6, 7 or 8 is to be repeated, an icon for the desired page is selected, as is shown in Fig. 9A, or a number key is directly depressed. Then, as is shown in Fig. 9B, the selected page data are displayed on the display device 105B.

As another example process used to select a desired page, direction keys (keys used to move a cursor up, down, left and right) or a mouse may be manipulated to move a cursor to a desired page on a tree screen indicating a history, and an Enter depressed.

## Claims

1. A page browsing apparatus for browsing page data at a site connected to a network, comprising:
a storage unit, for storing previously browsed page data;
a display unit, for displaying, using a tree structure, page data and predetermined data representing previously browsed pages and recorded in the storage unit;
a selection unit, for selecting data for a desired page from the predetermined data that are displayed, using the tree structure, on a display screen for the display unit; and
a unit, for displaying, on the display screen of the display unit, the data for the desired page selected by the selection unit.

2. A page browsing apparatus according to claim 1, wherein a screen of the display unit is divided into two screen segments, and the page data are displayed on one of the screen segments, while the previously browsed page data are displayed, using a tree structure, on the other screen segment.

3. A page browsing apparatus according to claim 1, wherein the display unit includes one display screen, and wherein the display on the display screen is switched between the display of the page data currently being browsed and the display, as a tree structure, of previously browsed page data.

4. A page browsing apparatus according to one of claims 1 to 3, wherein the selection unit is a pointing device for selecting an icon for one set of predetermined data displayed on the display screen using the tree structure.

5. A page browsing apparatus according to one of claims 1 to 3, wherein the selection unit is a number key for designating a page number for the predetermined data displayed, using the tree structure, on the display screen.

6. A page browsing apparatus according to one of claims 1 to 3, wherein the selection unit includes direction keys for moving a cursor along the predetermined data displayed, using the tree structure, on the display screen, and wherein a desired page is selected by depressing an Enter key while the cursor is positioned at location designated by using the direction keys.

7. A page browsing apparatus, for browsing page data at a site connected to a network, comprising:
a storage unit, for storing page previously browsed data;
a first display unit, for displaying page data;
a second display unit, for displaying, using a tree structure, predetermined data representing previously browsed pages and stored in the storage unit;
a selection unit, for selecting data for a desired page from the predetermined data that are displayed, using the tree structure, on the second display unit; and
a unit that displays, on the first display unit, the data for the desired page selected by the selection unit.

8. A page browsing apparatus according to claim 7, wherein the selection unit is a pointing device for selecting an icon for one set of predetermined data displayed on the display screen using the tree structure.

9. A page browsing apparatus according to claim 7, wherein the selection unit is a number key for designating a page number for the predetermined data displayed, using the tree structure, on the display screen.

10. A page browsing apparatus according to claim 7, wherein the selection unit includes direction keys for moving a cursor along the predetermined data displayed, using the tree structure, on the display screen, and wherein a desired page is selected by depressing an Enter key while the cursor is positioned at location designated by using the direction keys.
